# EUROPEAN PATENT APPLICATION

(11) **EP 4 333 226 A1**
(43) Date of publication of application: **06.03.2024**
(21) Application number: 23194937.1
(22) Date of filing: 01.09.2023
(51) Int. Cl.: H02G 3/04, F16L 5/04, H02G 3/22, A62C 3/16

(54) **THROUGH-WALL APPARATUS FOR CABLING**

(30) Priority: 05.09.2022 GB 202212882
(71) Applicant: Intumescent Systems Ltd, Dover, Kent CT15 7JG (GB)
(72) Inventor: Ward, Derek, Dover, CT15 7JG (GB)
(74) Representative: Fry, David John

(57) **Abstract**

Apparatus for enabling cabling to pass through a wall or ceiling opening between adjoining rooms or spaces of a building comprises first and second closure members each of which comprises a wall or ceiling mountable backing plate for location one on each side of said wall or ceiling opening. From one side of each backing plate projects an open-ended housing. which, in use, locates within the through-hole to define a channel through which cabling can pass. Each closure member further comprises on its side remote from the housing a closure member whose inner surface includes a resilient lining of an intumescent foam material. Each closure member is connected through a hinge mechanism to the respective backing plate to enable the closure member to move between a first position in which the wall or ceiling opening is open to enable cabling to be passed between the adjoining rooms or spaces and a second position in which the wall or ceiling opening is closed with the cabling trapped between the respective backing plate and the intumescent foam lining of the respective backing plate.

## Description

### Field of the Invention

This invention relates to wall or ceiling mountable apparatus for enabling cabling to pass safely between adjoining rooms or spaces of a building.

More especially, the invention concerns wall or ceiling mountable apparatus which is sound-proofed and which, in the event of a fire occurring in a room or space of a building, prevents or severely inhibits the passage of fire and smoke to an adjoining room or space of the building.

### Background to the Invention

In the event of a fire, through-holes formed in walls and ceilings (hereinafter simply referred to as "walls") of a building for the passage of cables and the like can, unless protected, enable fire and smoke to pass rapidly between adjoining rooms or spaces of a building potentially putting at risk the lives of any person resident in the building at the time of the fire.

It is also the case that such through-holes can adversely affect the acoustic properties of the adjoining rooms or spaces, a particular concern for recording studios and the like.

The present invention sets out to provide wall mountable apparatus for enabling cabling to pass between adjoining rooms or spaces of a building which does not materially affect the acoustic properties of such rooms or spaces and which, in the event of a fire, immediately closes to inhibit and/or prevent the passage of fire and smoke between said rooms or spaces.

### Summary of the Invention

In a preferred aspect the invention provides apparatus for enabling cabling to pass through a wall or ceiling opening between adjoining rooms or spaces of a building, the apparatus comprising first and second closure members each of which comprises a wall or ceiling mountable backing plate for location one on each side of said wall or ceiling opening and from one side of each of which projects an open-ended housing which, in use, locates within said through-hole to define a channel through which cabling can pass, each closure member further comprising on its side remote from said housing a resilient lining of an intumescent foam material, each housing being connected through a hinge mechanism to the respective backing plate to enable the closure member to move between a first position in which the wall or ceiling opening is open to enable cabling to be passed between the adjoining rooms or spaces and a second position in which the wall or ceiling opening is closed with the cabling trapped between the respective backing plate and the intumescent foam lining of the respective backing plate.

The resilient lining preferably comprises a sheet or sheets sponge material including or coated with a material which intumesces when exposed to excessive heat or fire.

The backing plate and housing of each closure member is preferably produced from steel.

### Brief Description of the Drawings

The invention will now be described by way of example only with reference to the accompanying diagrammatic drawings in which:-
Figures 1 is a side view of apparatus in accordance with the invention located in a wall of a building with closure members of the apparatus in their fully closed positions;
Figure 2 is a side view of the apparatus illustrated in Figure 1 with the closure members partially open;
Figure 3 is a front view of the apparatus with the illustrated closure member in its fully open position; and
Figure 4 is a plan view of the inner face of the closure member of the apparatus.

### Detailed Description of the Invention

The illustrated apparatus comprises a pair of closure members 10a, 10b attached one to each side of a through-hole 12 formed in a wall 14 of a building. Each closure member includes a wall mounted backing plate 16a, 16b to the rear face of each of which is secured an open-ended housing 17a, 17b which extends into the through-hole 12. The dimensions of the housings 17a, 17b are such as to enable one to fit snugly within the other to define a conduit between the open ends of the through-hole 12.

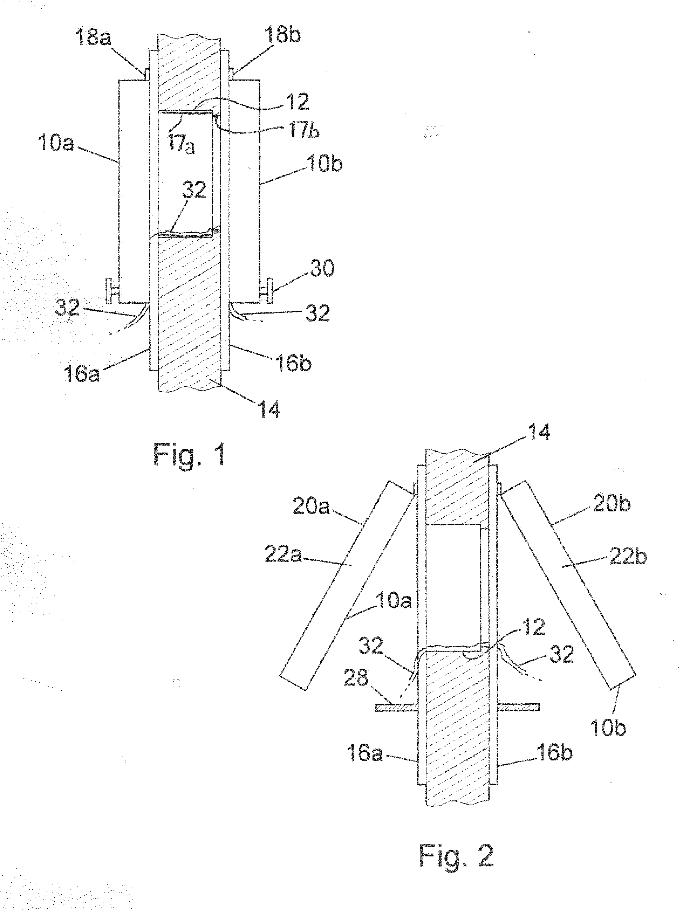

Secured to the front face of each backing plate 16a, 16b is one of the pair of pivotally mounted closure members 10a, 10b. Each closure member is moveable between a raised open position as illustrated in Figure 2 to enable access to the through-hole 12 and a closed position as illustrated in Figure 1 in which each side of the through-hole is securely closed. Hinges 18a, 18b are provided to secure the closure members 10a, 10b to the respective backing plate and to enable the closure members to move between their open and closed positions.

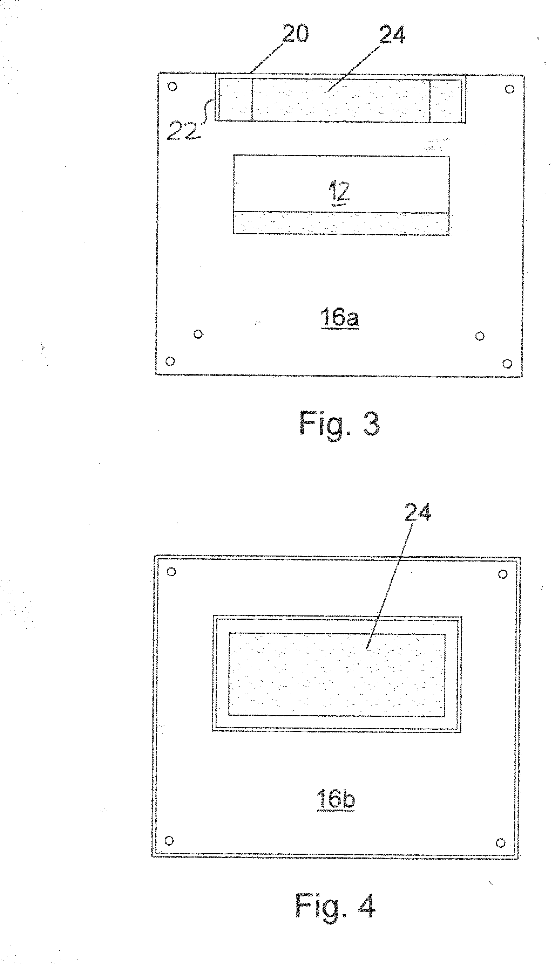

Each closure member 10a, 10b comprises a rectangular face plate 20a, 20b bordered by inwardly extending side walls 22a, 22b. As shown in Figure 3, each closure member 10a, 10b is lined internally with one or more sheets or pieces of a sponge material 24 coated with and/or including a material which intumesces in the event of being exposed to fire or excessive heat occasioned by a fire.

Preferably, these linings 24 extend over the entire innermost face (or substantially the entire innermost face) of each closure member 10a, 10b.

The side walls 22a, 22b do not extend across the lower boundaries of the closure members 10a, 10b but only across the upper and side boundaries of the closure members. As will be seen from Figure 3, the internal linings of sponge material 24 define edges for these lower boundaries.

The backing plates 16a, 16b, the rectangular plates 20a, 20b and the side plates 22a, 22b are preferably produced from steel or a material having similar properties to steel.

Each closure member 10a, 10b is formed with openings to receive threaded bolts 28 protruding outwardly from the respective plate 16a, 16b to enable the closure members 10a, 10b to be securely attached by suitably threaded nuts 30 to the respective plate 16a, 16b.

In use, the closure members 10a, 10b are initially opened or partially opened as shown in Figure 2 to enable cabling 32 to be passed from one room to an adjoining room. The closure members are then closed to trap the cabling between the foam lined walls of the closure members and the adjacent walls of the backing plates 16a, 16b. The foam lining prevents damage to the cabling once the closure members are closed as shown in Figure 1.

Importantly, the acoustic properties of the adjoining rooms or spaces are not materially affected by the transfer of the cabling from one room to the other.

Indeed, the presence of the sponge material when taken with the metallic closure members ensures that the acoustic qualities of each adjoining room or space are not diminished by the presence of through-holes necessarily provided to enable required electric cabling to pass from one location to another.

It will be appreciated that the foregoing is merely exemplary of wall or ceiling mountable apparatus in accordance with the invention and that modifications can readily be made thereto without departing from the true scope pf the invention as set out in the appended claims.

## Claims

1. Apparatus for enabling cabling (32) to pass through a wall or ceiling opening (12) between adjoining rooms or spaces of a building, the apparatus comprising first and second closure members (10a, 10b) each of which comprises a wall or ceiling mountable backing plate (16a, 16b) for location one on each side of said wall or ceiling opening and from one side of each of which projects an open-ended housing (17a, 17b) which, in use, locates within said through-hole to define a channel through which cabling can pass, each closure member (10a, 10b) further comprising on its side remote from said housing (17a, 17b) a resilient lining (24) of an intumescent foam material, each housing (17a, 17b) being connected through a hinge mechanism (18a), 18b) to the respective backing plate (16a, 16b) to enable the respective member (10a, 10b) to move between a first position in which the wall or ceiling opening is open to enable cabling (32) to be passed between the adjoining rooms or spaces and a second position in which the wall or ceiling opening is closed with the cabling trapped between the respective backing plate and the intumescent foam lining of the respective backing plate.

2. Apparatus as claimed in claim 1 wherein the resilient lining comprises a sheet or sheets sponge material (24) including or coated with a material which intumesces when exposed to excessive heat or fire.

3. Apparatus as claimed in claim 1 or claim 2 wherein the backing plate and housing of each closure member are produced from steel.
